# FASCICULE DE BREVET EUROPEEN

(11) **EP 1 314 999 B1**
(45) Date de publication et mention de la délivrance du brevet: **26.01.2011**
(21) Numéro de dépôt: 02102554.9
(22) Date de dépôt: 08.11.2002
(51) Int. Cl.: G01S 13/42, G01S 13/72

(54) **Procédé de construction de trames**
Verfahren zum Zeitrasterbau
Method for building frames

(30) Priorité: 26.11.2001 FR 0115520
(43) Date de publication de la demande: 28.05.2003
(73) Titulaire: Thales, 75008 Paris (FR)
(72) Inventeur: Barbaresco, Frédéric, Thales Int. Property, 94117 Arcueil Cedex (FR); Monnier, Bernard, Thales Int. property, 94117 Arcueil Cedex (FR)
(74) Mandataire: Lucas, Laurent Jacques

(56) Documents cités:
- FR-A- 2 723 211
- FR-A- 2 737 578
- US-A- 4 649 390
- US-A- 5 748 468
- PATENT ABSTRACTS OF JAPAN vol. 2000, no. 04, 31 août 2000 (2000-08-31) & JP 2000 003286 A (NEC MOBILE COMMUN LTD), 7 janvier 2000 (2000-01-07)
- PATENT ABSTRACTS OF JAPAN vol. 1995, no. 10, 30 novembre 1995 (1995-11-30) & JP 07 177197 A (NEC CORP), 14 juillet 1995 (1995-07-14)
- PHAM K K: "Location accuracy in X-band multifunction radar" PROCEEDINGS OF THE NATIONAL RADAR CONFERENCE. LOS ANGELES, MAR. 12 - 13, 1991, NEW YORK, IEEE, US, vol. CONF. 5, 12 mars 1991 (1991-03-12), pages 6-10, XP010038682 ISBN: 0-87942-629-2

## Description

La présente invention concerne un procédé de construction de trames, chaque trame étant une succession de tâches ordonnancées destinées à être exécutées. Elle s'applique notamment à la construction de trames d'un radar, tel qu'un radar multifonction à balayage électronique, les tâches ordonnancées étant les pointages du radar.

Les radars multifonction à balayage électronique peuvent dépointer leurs faisceaux de façon instantanée dans un cône d'axe perpendiculaire au plan de l'antenne. Ils possèdent différents modes de fonctionnement : antenne tournante, antenne arrêtée, mode mixte, antenne multi-dales... Les radars multifonction effectuent plusieurs types de pointages correspondant à différentes missions opérationnelles : la détection (pointages de veille), le pistage de cibles (pointages de poursuite), l'identification, le guidage de missile...

Un radar comprend généralement un générateur de requêtes, qui traduit les missions en pointages. A une mission de veille correspondent des pointages permettant de mailler un espace de veille. A une mission de poursuite correspond un ou plusieurs pointages permettant de suivre une piste. Les pointages des missions de veille et des missions de poursuite sont destinés à être exécutées de manière périodique. Il existe aussi des pointages dont l'exécution est sporadique, notamment les pointages de confirmation (suite à une détection lors d'une veille) et les pointage de ré-acquisition (suite à une non détection lors d'une poursuite). Ces pointages sporadiques peuvent être prioritaires par rapport aux pointages périodiques. L'exécution des pointages, périodiques ou sporadiques, est ordonnancée par un ordonnanceur.

L'ordonnanceur permet de construire des trames de longueur temporelle déterminée. Lorsqu'une trame est en train de se construire, la précédente est exécutée par le radar. L'ordonnanceur fonctionne donc en temps réel, car le temps nécessaire à la construction d'une trame doit être inférieur à la durée d'exécution de la précédente par le radar.

Pour que le fonctionnement de ces radars soit optimal, il faut optimiser l'ordonnancement temporel des pointages. A cet effet, on utilise un algorithme rapide, basé sur une politique d'ordonnancement simple. Ceci permet à cet algorithme de fonctionner en un temps restreint, compatible avec les contraintes imposées par l'exécution en temps réel.

Or l'ordonnancement temporel des pointages est un problème d'optimisation multicritère, qui consiste à la fois à maximiser la charge du radar et à exécuter les pointages les plus importants. Etant donné la combinatoire exponentielle de ce problème, il n'existe pas d'algorithme permettant, en un temps restreint, de donner une solution optimale.

Le texte du brevet US 4,649,390 délivré le 10 mars 1987 à la société Hugues Aircraft, decrit un système radar mettant en oeuvre au cours du balayage de l'espace surveillé, deux modes de fonctionnements, un mode de fonctionnement courant selon lequel, le radar caractérise les objets détectés au moyen de paramètres à deux dimensions (azimut et distance) et un mode spécifique déclenché sur décision du système selon lequel pour certains objets présentant un intérêt particulier, le radar caractérise les objets détectés au moyen de paramètres à trois dimensions (azimut, distance et élévation). Selon ce document le choix du mode de fonctionnement adopté pour un azimut donnée est ici déterminé a priori, et ne fait pas l'objet d'un choix dynamique.

Le texte du brevet US 5,748,468 délivré le 10 mars 1987 à la société Microsoft, décrit un système et un procédé associé permettant d'optimiser l'utilisation de ressources de traitement de données pour réaliser un ensemble de tâches répertoriées devant être réalisées à un instant donné. Le procédé attribue à chaque tâche un niveau de priorité et gère de manière dynamique en fonction de l'apparition de tâches nouvelles le niveau de priorité des tâches déjà répertoriées. Cet ordonnancement dynamique est réalisé en tenant compte des ressources disponibles. Le procédé décrit ici ne réalise cependant qu'un simple ordonnancement temporel des tâches à exécuter, celles-ci étant exécutées à la suite les une des autres en fonction de leur ordre de priorité.

Le texte de la demande de brevet FR 8417933 déposée le 23 novembre 1984 par la société Dassault Electronique et publiée le 2 février 1996 sous la référence FR-A-2 723 211, décrit quant à lui un dispositif radar équipé d'une antenne à balayage électronique comportant des moyens permettant l'entrelacement temporel rapide de formes d'ondes différentes cet entrelacement permettant quant à lui d'optimiser l'utilisation du temps correspondant à la durée maximale de chaque récurrence radar. Selon ce document, ce temps est ainsi utilisé pour effectuer des tâches distinctes dans des directions différentes. Le document ne précise cependant pas si un choix doit être effectué en temps réel pour déterminer les tâches à exécuter et si oui comment ce choix peut être effectué.

Par ailleurs le document de Kim K. Pham intitulé "location accuracy in X-band multifunction radar", publié dans les pages 6 à 10 de la revue référencée IEEE, US, VOL. CONF. 5 du 12 mars 1991, présente un radar comportant une antenne tournante à réseaux et des moyens permettant de réaliser un balayage électronique 3D à l'aide de cette antenne, ledit radar étant capable de réaliser des tâches radar diverses telle que des pointages de veille, de confirmation et de poursuite, ainsi que des tâches de télécommande de missiles. Le document ne décrit cependant pas comment les capacités de l'antenne sont mises en oeuvre au cours du temps pour effectuer les différents pointages.

Par ses caractéristiques, telles qu'elles seront décrites et revendiquées ci-après, l'invention vise à construire des trames, de manière simple et rapide, en cherchant à respecter simultanément :
- les contraintes temporelles,
- les contraintes de priorité.
Pour satisfaire à cet objectif et obtenir d'autres avantages qui ressortiront plus loin, l'invention a pour objet un procédé de construction de trames, caractérisé en ce que :
(a) on ordonnance (E1) les tâches d'une liste principale (L1) pour construire une trame (TR), les tâches étant placées dans cette trame ou restant dans la liste principale ;
(b) on vérifie (E2) qu'aucune tâche placée dans cette trame n'est en conflit avec une éventuelle tâche destinée à être rejetée ;
(c) si aucune tâche n'est en conflit, on accepte (E4) cette trame ;
(d) sinon, on place (E3) une ou plusieurs des tâches (TR1) en conflit de la trame dans une liste secondaire (L2), on place les autres tâches de la trame dans la liste principale, et on réitère l'ordonnancement (E1) pour reconstruire cette trame ;
(e) lorsque la trame est acceptée (E4), on place les éventuelles tâches de la liste secondaire (L2) dans la liste principale (L1), on rejette (RJ) les éventuelles tâches destinées à être rejetées, et on construit de la même façon (E1, E2, E3, E4) la trame suivante à partir des tâches de la liste principale.
Selon un mode de mise en oeuvre avantageux, ce procédé se caractérise en ce que pour vérifier qu'aucune tâche n'est en conflit (E2) :
(a) on vérifie (E21) qu'aucune tâche de la trame (TR) a une priorité inférieure à celle d'une tâche destinée à être rejetée;
(b) s'il n'y en a aucune, on considère qu'aucune tâche n'est en conflit ;
(c) sinon, on sélectionne (E22) une tâche parmi celles (LR1) destinées à être rejetées (LR) et dont la priorité est supérieure à la plus petite priorité (PMN) des tâches de la trame (TR) ;
(d) on vérifie (E23) que la tâche sélectionnée n'est en conflit avec aucune tâche de la trame (TR) ;
(e) si la tâche sélectionnée est en conflit, on considère qu'il y a un conflit ;
(f) sinon, s'il n'y a pas d'autre tâche à sélectionner (24) on considère qu'il n'y a pas de conflit,
(g) sinon on sélectionne une autre tâche (E22), et on réitère la vérification (E23) de la tâche sélectionnée.

Selon un mode de mise en oeuvre avantageux, ce procédé se caractérise en ce que lorsqu'on a détecté un conflit avec une tâche destinée à être rejetée, on place (E3) dans la liste secondaire (L2) la tâche de la trame (TR) en conflit avec ladite tâche destinée à être rejetée dont la date d'exécution est la plus proche la date d'échéance de ladite tâche destinée à être rejetée.

Selon un mode de mise en oeuvre avantageux, on considère que deux tâches sont en conflit si :
- la première tâche est destinée à être rejetée,
- la seconde tâche est destinée à être exécutée dans la fenêtre d'activation de la première tâche, et
- la priorité de la première tâche est supérieure à celle de la seconde tâche.

Selon un autre mode de mise en oeuvre avantageux, on considère que deux tâches sont en conflit si :
- la première tâche est destinée à être rejetée,
- la date d'exécution de la seconde tâche est comprise dans la fenêtre d'activation de la première tâche, et
- la priorité de la première tâche est supérieure à celle de la seconde tâche.

L'invention sera maintenant décrite de manière plus détaillée dans le cadre d'un exemple particulier de mise en oeuvre pratique appliquée à un radar. Dans le cours de cette description, on fera référence aux figures des dessins annexés, parmi lesquelles :
- la figure 1 représente des ensembles de pointages lorsqu'on cherche à construire une trame ;
- la figure 2 représente quelques étapes d'un exemple de mise en oeuvre du procédé selon l'invention ;
- la figure 3 représente une situation de conflit entre des pointages d'une trame et un pointage dont la date d'échéance est dépassée ;
- la figure 4 représente des ensembles de pointages lorsqu'on a accepté une trame ;
- la figure 5 représente une sélection de pointages pouvant être en conflit ;
- la figure 6 représente les étapes d'un exemple de mise en oeuvre d'un procédé de recherche de conflit.

Une tâche possède des caractéristiques temporelles, notamment :
- une date d'activation,
- une date d'échéance,
- une date d'exécution,
- une durée d'exécution.

La date d'activation est la date à laquelle la tâche peut être exécutée au plus tôt, c'est à dire la date à laquelle la tâche devient éligible.

La date d'échéance est la date à laquelle la tâche doit avoir fini d'être exécutée, c'est à dire la date à laquelle l'exécution de la tâche doit être nécessairement terminée. La date d'échéance est plus tardive que la date d'activation.

La date d'exécution est la date à laquelle débute effectivement l'exécution de la tâche. Cette date d'exécution est définie une fois la tâche placée dans une trame. La durée d'exécution de la tâche est l'intervalle de temps entre sa date d'exécution et la fin de son exécution.

Pour qu'une tâche ait le temps de s'exécuter, sa date d'exécution doit être antérieure à sa date d'échéance moins sa durée d'exécution. La date la plus tardive à laquelle la tâche peut être activée est la date d'échéance diminuée de la durée d'exécution. On appelle fenêtre d'activation l'intervalle de temps compris entre la date d'activation et la date la plus tardive à laquelle la tâche peut être activée. La date d'exécution est comprise dans la fenêtre d'activation de la tâche.

Une tâche peut aussi posséder une date optimale d'exécution. La date optimale d'exécution d'une tâche est la date d'exécution de la tâche à laquelle ses performances sont optimales.

Une tâche possède aussi une priorité. La priorité d'une tâche est son degré d'importance. Elle est généralement représentée par un entier positif. On utilise un nombre élevé pour indiquer que l'exécution de cette tâche est importante, et faible dans le cas contraire.

On décrit l'application de l'invention à la construction de trames d'un radar. Dans cet exemple, les tâches à ordonnancer sont des pointages. On ordonnance en temps réel les pointages pour construire des trames. Une fois qu'une trame est construite, elle est envoyée à un dispositif de gestion spatio-temporelle. Ce dispositif va faire exécuter les pointages de cette trame par le radar. Pendant l'exécution de la trame, on construit la trame suivante avec les pointages restant.

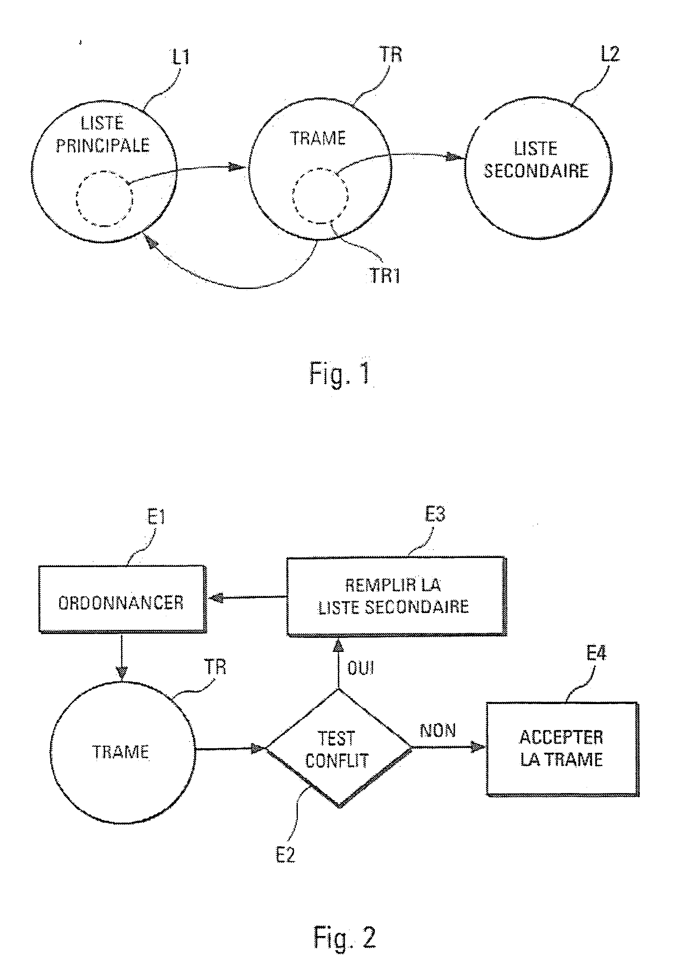

On se réfère aux figures 1 et 2 pour décrire plus en détail un exemple de mise en oeuvre de l'invention pour construire une trame. On dispose d'un ensemble de pointages que l'on souhaite exécuter. Ces pointages forment une liste principale L1. On ordonnance E1 les pointages de la liste principale L1 pour construire une trame provisoire TR. Les pointages de la liste principale L1 sont placés dans cette trame TR ou restent dans la liste principale. La trame provisoire TR est construite en utilisant une politique d'ordonnancement simple et rapide à mettre en oeuvre. Cette politique d'ordonnancement permet de respecter les contraintes temporelles.

On peut utiliser par exemple une politique d'ordonnancement connue sous l'acronyme EDF (issu de l'expression anglo-saxonne « Earliest Deadline First »). Cette politique consiste à placer dans la trame les pointages par ordre de date d'échéance arrivant en premier. Cette politique est simple car il suffit de trier les pointages par date d'échéance, et de construire la trame de manière directe. On peut montrer que cette politique permet d'ordonnancer tous les pointages si une telle solution existe. Cette politique d'ordonnancement tient compte des contraintes temporelles, mais pas des contraintes de priorité.

Bien entendu, on peut utiliser une autre politique d'ordonnancement que celle-ci. Par exemple, la politique d'ordonnancement peut consister à placer dans la trame les pointages par ordre de date optimale d'exécution la plus proche. On désigne cette politique par l'acronyme HDF, ayant pour origine l'expression anglo-saxonne « High delay from Due time First ».

Pour les radars à antenne tournante, la politique EDF a tendance à favoriser un ordonnancement des pointages en front avant du cône de visibilité. En d'autres termes, les pointages sont exécutés le plus tôt possible (juste après leur date d'activation). Ceci a pour conséquence d'augmenter la déflexion moyenne globale des pointages exécutés. Ce fonctionnement n'est pas optimal car les pointages sont moins performants lorsqu'ils sont exécutés trop tôt. En utilisant la politique HDF, on cherche plutôt à exécuter les pointages à leur date optimale d'exécution, c'est à dire par exemple lorsque l'axe de visée est perpendiculaire au plan de l'antenne. En d'autres termes, la politique HDF permet de réduire la déflexion moyenne globale des pointages exécutés.

Les éventuels pointages de la liste principale L1 (c'est à dire non placé dans la trame TR) dont la fenêtre d'activation est entièrement avant la date de fin d'exécution de la trame TR sont destinés à être rejetés. En effet, ces pointages ne pourront plus être exécutés une fois la trame TR exécutée : leur date d'échéance sera dépassée. Or il peut exister un pointage de la trame TR qui, s'il est enlevé provisoirement de la liste principale L1 pendant la durée de la construction de cette trame TR, permette de placer l'un des pointages destinés à être rejetés et qui est plus prioritaire. Les contraintes de priorités ne sont pas respectées pour ces deux pointages. On dit alors que ces deux pointages sont en conflit. En d'autres termes, on considère qu'il existe un conflit entre un premier pointage et un second pointage lorsque :
- le premier pointage a une priorité supérieure au second pointage ;
- le premier pointage est destiné à être rejeté ;
- le second pointage est placé dans la trame TR ;
- les chances de placer le premier pointage dans la trame TR augmentent de manière non négligeable si on enlève provisoirement (pendant la durée de construction de la trame TR) le second pointage de la liste principale.

Deux pointages ne sont pas en conflit par exemple si la date d'échéance du premier précède la date d'exécution du second. En effet, la construction d'une trame est déterministe. Par conséquent, le fait d'enlever provisoirement le second pointage ne modifie pas la construction de la trame avant ce pointage. Or le premier pointage ne peut être placé dans la trame qu'avant la date d'exécution du second. Les chances de placer le premier pointage dans la trame TR sont donc nulles même si on enlève provisoirement le second pointage de la liste principale.

Les chances de placer le premier pointage si on retire le second de la trame dépendent de la politique d'ordonnancement. Par conséquent, les critères permettant de déterminer si deux pointages sont en conflits dépendent de la politique d'ordonnancement.

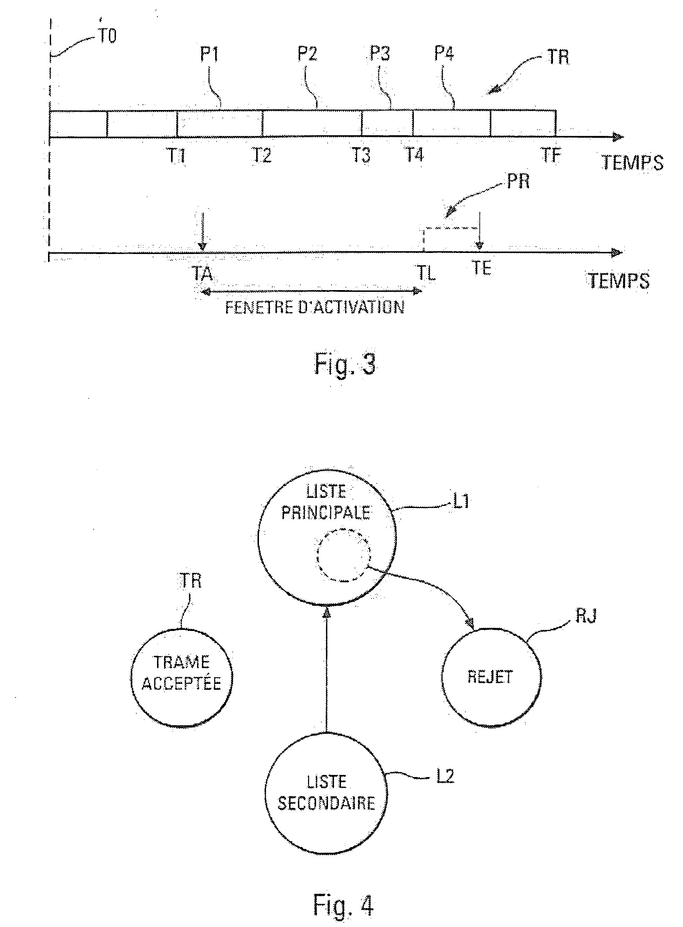

On se réfère maintenant à la figure 3. La trame provisoire TR est destinée à être exécutée à partir de la date T0 jusqu'à la date TF. Elle comprend notamment une suite de pointages P1, P2, P3, P4 dont les dates d'exécution sont respectivement T1, T2, T3, T4. Il n'y a pas de temps mort dans cette trame. Par conséquent les dates de fin d'exécution des pointages P1, P2, P3 sont respectivement T2, T3, T4. A la fin de la construction de cette trame, il reste dans la liste principale L1 un pointage PR destiné à être rejeté. La date d'échéance TE du pointage PR est antérieure à la date TF. Le pointage PR ne possède pas de date d'exécution car il n'est pas placé dans une trame. La date d'activation du pointage TA, c'est à dire le début de sa fenêtre d'activation, est comprise entre T1 et T2. La date limite TL à laquelle peut débuter l'exécution du pointage PR, c'est à dire la fin de sa fenêtre d'activation, est comprise entre le début T4 et la fin d'exécution du pointage P4. Ce pointage PR est donc destiné à être rejeté. On suppose que la priorité du pointage PR est supérieure à celle des pointages de la trame provisoire. On présente maintenant quelques exemples de critères permettant de déterminer si deux pointages sont en conflit. Le premier pointage est le pointage PR. On cherche à déterminer quels est/sont les seconds pointages en conflit.

Par exemple, on peut considérer que deux pointages sont en conflit si la date d'exécution du second est dans la fenêtre d'activation du premier. En effet, le fait d'enlever provisoirement le second pointage libère une date à laquelle il est possible de placer le premier pointage dans la trame. Avantageusement, si la politique d'ordonnancement est EDF par exemple, on utilise ce critère pour déterminer si deux pointages sont en conflits. Sur la figure 3, les pointages en conflit avec le pointage PR sont P2, P3, P4 car les dates d'exécution de ces pointages sont comprises entre TA et TE.

On peut bien entendu utiliser un autre critère. Par exemple, on peut considérer que deux pointages sont en conflit si le second s'exécute au moins partiellement dans la fenêtre d'activation du premier. Ce critère est différent du précédent. Selon ce critère, on considère qu'il y a plus de pointages en conflit qu'avec le précédent. Sur la figure 3, les pointages en conflit avec le pointage PR sont P1, P2, P3, P4.

On peut utiliser encore un autre critère. Par exemple, on peut considérer que deux pointages sont en conflit si le second s'exécute entièrement dans la fenêtre d'activation du premier. Sur la figure 3, les pointages en conflit avec le pointage PR sont P2 et P3.

On se réfère aux figures 1 et 2. Une fois la trame provisoire TR construite E1, on cherche s'il est possible de mieux respecter les contraintes de priorité en retirant l'un des pointages de cette trame. A cet effet, on vérifie E2 qu'aucun pointage placé dans cette trame TR n'est en conflit avec un pointage de la liste principale L1 (c'est à dire non placé dans la trame TR) dont la date d'échéance est dépassée. Si aucun pointage n'est en conflit, on accepte E4 cette trame. Sinon, on place E3 un ou plusieurs des pointages TR1 en conflit de la trame dans une liste secondaire L2, on place les autres pointages de la trame dans la liste principale, et on réitère l'ordonnancement E1 pour reconstruire cette trame. Lorsque cette trame est reconstruite, on dispose d'une trame qui respecte mieux les contraintes de priorité.

On peut boucler ainsi et reconstruire la trame jusqu'à éliminer tous les conflits. On peut limiter le nombre d'itérations, c'est à dire le nombre de fois qu'on reconstruit la même trame. En effet, la construction de la trame doit être suffisamment rapide pour qu'elle soit envoyée assez tôt au dispositif de gestion spatio-temporelle. On peut donc être amené à accepter une trame et l'envoyer au dispositif de gestion spatio-temporelle alors qu'il reste des conflits détectés.

On se réfère maintenant à la figure 4. Lorsque la trame est acceptée E4, on place les éventuels pointages de la liste secondaire L2 dans la liste principale L1. On rejette RJ les éventuels pointages dont la fenêtre d'activation est dépassée. On construit de la même façon E1, E2, E3, E4 la trame suivante à partir des pointages de la liste principale. Ainsi, les pointages qui ont été placés dans la liste secondaire ont été enlevés provisoirement (pendant la durée de la construction de la trame) de la liste principale.

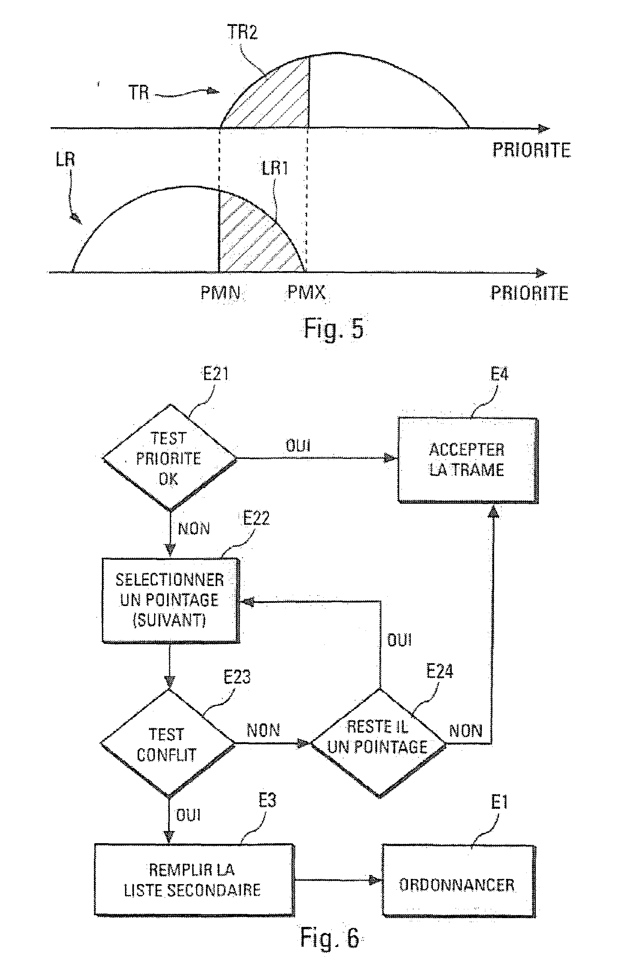

On se réfère maintenant aux figure 5 et 6. Selon un mode de mise en oeuvre avantageux, pour vérifier rapidement qu'aucun pointage n'est en conflit E2. On effectue d'abord un test global E21 sur les priorités des pointages. Ce test global E21 est rapide. Si le test global E21 n'est pas suffisant, on effectue des tests de conflit E23 sur un ensemble réduit de pointages.

Le test global E21 consiste à vérifier qu'aucun pointage de la trame TR a une priorité inférieure à celle d'un pointage destiné à être rejeté LR. A cet effet, on peut comparer la plus petite priorité PMN des pointages de la trame TR à la plus grande priorité PMX des pointages destinés à être rejetés.

Si la plus petite priorité PMN est supérieure à la plus grande PMX, le résultat du test est positif. Il n'y a aucun pointage dans la trame TR dont la priorité est inférieure à celle d'un pointage destiné à être rejeté LR. Ceci suffit pour savoir qu'il n'y a aucun conflit. Par conséquent, on considère si le résultat du test E21 est positif qu'il n'y a aucun conflit. La trame TR est alors acceptée E4.

Sinon, il existe des pointages potentiellement en conflit dans deux ensembles réduits de pointages. Ces ensembles sont représentés par des zones hachurées sur la figure 5. Le premier ensemble LR1 est l'ensemble des pointages destinés à être rejetés LR et dont la priorité est supérieure à la plus petite priorité PMN des pointages de la trame TR. Le second ensemble TR2 est l'ensemble des pointages de la trame TR et dont la priorité est inférieure à la plus grande priorité PMX des pointages destinés à être rejetés LR.

On teste qu'aucun pointage du premier ensemble LR1 n'est en conflit avec un pointage de la trame TR. A cet effet, on sélectionne E22 un pointage parmi ceux du premier ensemble LR1. Avantageusement, on sélectionne préférentiellement un pointage du premier ensemble LR1 de priorité élevée. Par exemple on sélectionne un pointage de priorité maximale PMX. On vérifie E23 que le pointage sélectionné n'est en conflit avec aucun pointage de la trame TR. Il est nécessaire d'effectuer ce test que sur les pointages de la trame TR dont la priorité est inférieure au pointage sélectionné, c'est à dire sur un ensemble inclus dans TR2.

Si le pointage sélectionné est en conflit avec au moins un pointage de la trame TR, on considère qu'il y a un conflit dans la trame TR. On place alors un ou plusieurs pointages de la trame dans la liste secondaire E3.

Si le pointage sélectionné n'est en conflit avec aucun pointage de la trame TR, on cherche à sélectionner un autre pointage. S'il n'y a pas d'autre pointage à sélectionner E24 on considère qu'il n'y a pas de conflit dans la trame TR. On accepte E4 donc la trame TR.

Sinon, on sélectionne un autre pointage E22. On réitère ainsi la vérification E23 du pointage sélectionné jusqu'à trouver un pointage en conflit, ou accepter la trame (si on ne peut plus sélectionner de pointage). Avantageusement, on sélectionne les pointages par ordre de priorité décroissante. Ceci permet de replacer dans la trame TR les pointages de priorité plus élevée en premier.

Dans le cadre d'un exemple de mise en oeuvre pratique, on vérifie d'abord E21 que l'ensemble des pointages placés dans la trame TR sont plus prioritaires que les pointages destinés à être rejetés. Si le test est positif, la trame est acceptée et envoyée au dispositif de gestion spatio-temporelle. Dans le cas contraire, on effectue d'autres vérifications E23, E24 avant d'accepter ou refuser la trame. On commence par sélectionner les pointages potentiellement en conflit dans deux listes LR1, TR2. La première LR1 est la liste des pointages destinés à être rejetés LR et dont la priorité est supérieure à la priorité minimale PMN des pointages placés dans la trame TR. La seconde TR2 est la liste des pointages placés dans la trame TR et dont la priorité est inférieure à la priorité maximale PMX des pointages destinés à être rejetés LR. Dans la première liste LR1, on sélectionne le pointage de priorité maximum. On considère les pointages de la seconde liste PR2 dont la date d'exécution est comprise dans la fenêtre d'activation du pointage sélectionné et dont la priorité est inférieure au pointage sélectionné. En d'autres termes, on considère les pointages en conflit avec le pointage sélectionné. S'il y en a plusieurs, on choisit celui dont la date d'exécution est la plus proche de la date d'échéance du pointage sélectionné. On place E3 le pointage choisit dans la liste secondaire L2 et on relance l'ordonnancement E1 pour reconstruire la trame TR. S'il n'y en a aucun, on itère ces étapes de sélection-choix avec le pointage de la liste LR1 de priorité immédiatement inférieure. Si à la suite de ces itérations E22, E23, E24 sur les pointages de la liste LR1 on ne détecte aucun conflit, on accepte E4 la trame TR.

Bien entendu, l'invention s'applique à d'autres domaines dans lesquels des tâches doivent être ordonnancées.

Elle s'applique notamment aux satellites d'observation. On peut ainsi ordonnancer les prises de vue qu'un satellite d'observation (tel que SPOT) doit effectuer de la terre par exemple. Dans cette application, chaque prise de vue est une tâche. La fenêtre d'activation de ces tâches dépend de la position relative du satellite et de la zone à photographier (déflexion maximale possible), des conditions météo (visibilité),... Les priorités des tâches sont dépendent par exemple du type de client (les prises de vue des clients militaires sont plus prioritaires que celles des clients civils par exemple). Une trame est construite à chaque fois que le satellite passe du côté obscur de la terre, et exécutée du côté ensoleillé.

L'invention s'applique plus généralement à tout dispositif de prise de vue. A titre d'exemple, l'invention s'applique à la construction de trames d'un équipement optronique embarqué dans un avion. Les tâches dans cet exemple sont les prises de vues effectuées par l'équipement optronique. Ces prises de vues peuvent avoir d'autres caractéristiques (champ de la prise de vue : grand champ ou petit champ) qui influent sur le choix de la politique d'ordonnancement (on cherche à limiter le nombre de commutations grand champ / petit champ par exemple). La politique d'ordonnancement choisie peut tenir compte de ces autres caractéristiques, le procédé selon l'invention s'appliquant de la même façon.

## Revendications

1. Procédé de construction de trames, **caractérisé en ce que** :
(a) on ordonnance (E1) les tâches d'une liste principale (L1) pour construire une trame (TR), les tâches étant placées dans cette trame ou restant dans la liste principale ;
(b) on vérifie (E2) qu'aucune de ces tâches placées dans cette trame n'est en conflit avec une éventuelle tâche destinée à être rejetée ;
(c) si aucune tâche n'est en conflit, on accepte (E4) cette trame ;
(d) sinon, on place (E3) une ou plusieurs des tâches (TR1) en conflit de la trame dans une liste secondaire (L2), on place les autres tâches de la trame dans la liste principale, et on réitère l'ordonnancement (E1) pour reconstruire cette trame sans tenir compte des tâches contenues dans la liste secondaire(L2) ;
(e) lorsque la trame est acceptée (E4), on place les éventuelles tâches de la liste secondaire (L2) dans la liste principale (L1), on rejette (RJ) les éventuelles tâches destinées à être rejetées, et on construit de la même façon (E1, E2, E3, E4) la trame suivante à partir des tâches de la liste principale.

2. Procédé selon la revendication 1, **caractérisé en ce que** pour vérifier qu'aucune tâche n'est en conflit avec une éventuelle tâche destinée à être rejetée (E2) :
(a) on vérifie (E21) qu'aucune tâche de la trame (TR) a une priorité inférieure à celle d'une tâche destinée à être rejetée ;
(b) s'il n'y en a aucune, on considère qu'aucune tâche n'est en conflit ;
(c) sinon, on sélectionne (E22) une tâche parmi celles (LR1) destinées à être rejetées (LR) et dont la priorité est supérieure à la plus petite priorité (PMN) des tâches de la trame (TR) ;
(d) on vérifie (E23) que la tâche sélectionnée n'est en conflit avec aucune tâche de la trame (TR) ;
(e) si la tâche sélectionnée est en conflit, on considère qu'il y a un conflit ;
(f) sinon, s'il n'y a pas d'autre tâche à sélectionner (24) on considère qu'il n'y a pas de conflit ;
(g) sinon on sélectionne une autre tâche (E22), et on réitère la vérification (E23) de la tâche sélectionnée.

3. Procédé selon la revendication 2, **caractérisé en ce que** lorsqu'on a détecté un conflit avec une tâche destinée à être rejetée, on place (E3) dans la liste secondaire (L2) la tâche de la trame (TR) en conflit avec ladite tâche destinée à être rejetée dont la date d'exécution est la plus proche la date d'échéance de ladite tâche destinée à être rejetée.

4. Procédé selon l'une quelconque des revendications précédentes, **caractérisé en ce qu'**on considère que deux tâches sont en conflit si :
- la première tâche est destinée à être rejetée,
- la seconde tâche est destinée à être exécutée dans la fenêtre d'activation de la première tâche, et
- la priorité de la première tâche est supérieure à celle de la seconde tâche,
la fenêtre d'activation d'une tâche correspondant à l'intervalle de temps séparant la date à partir de laquelle la tâche peut être exécutée et la date la plus tardive à laquelle la tâche peut encore être exécutée.

5. Procédé selon l'une quelconque des revendications 1 à 3, **caractérisé en ce qu'**on considère que deux tâches sont en conflit si :
- la première tâche est destinée à être rejetée,
- la date d'exécution de la seconde tâche est comprise dans la fenêtre d'activation de la première tâche, et
- la priorité de la première tâche est supérieure à celle de la seconde tâche,
la fenêtre d'activation d'une tâche correspondant à l'intervalle de temps séparant la date à partir de laquelle la tâche peut être exécutée et la date la plus tardive à laquelle la tâche peut encore être exécutée.

## Claims

1. A process for constructing frames, **characterised in that**:
(a) the tasks in a principal list (L1) are ordered (E1) to construct a frame (TR), the tasks being placed in this frame or remaining in the principal list;
(b) it is verified (E2) that none of said tasks placed in said frame are in conflict with any task destined to be rejected;
(c) said frame is accepted (E4) if no task is in conflict;
(d) otherwise, one or more of the tasks (TR1) of the frame which are in conflict are placed (E3) in a secondary list (L2), the other tasks of the frame are placed in the principal list, and the ordering (E1) is repeated in order to reconstruct said frame without taking into account the tasks contained in the secondary list (L2);
(e) when the frame is accepted (E4), any tasks in the secondary list (L2) are placed in the principal list (L1), any tasks destined to be rejected are rejected (RJ) and the next frame is constructed in the same manner (E1, E2, E3, E4) from the tasks in the principal list.

2. The process according to claim 1, **characterised in that** in order to verify that no task is in conflict with any task destined to be rejected (E2):
(a) it is verified (E21) that no task in the frame (TR) has a priority lower than that of a task destined to be rejected;
(b) if there are no such tasks, no task is considered to be in conflict;
(c) otherwise, a task is selected (E22) from those (LR1) tasks destined to be rejected (LR) and which has a priority that is higher than the lowest priority (PMN) of the tasks in the frame (TR);
(d) it is verified (E23) that the selected task is not in conflict with any task in the frame (TR);
(e) if the selected task is in conflict, a conflict is considered to be present;
(f) otherwise, if no other task is to be selected (24) no conflict is considered to be present;
(g) otherwise, another (E22) is selected and the verification (E23) of the selected task is repeated.

3. The process according to claim 2, **characterised in that** when a conflict with a task destined to be rejected has been detected, the task in the frame (TR) which is in conflict with said task destined to be rejected, and the date of execution of which is closest to the date of expiration of said task destined to be rejected, is placed (E3) in the secondary list (L2).

4. The process according to any one of the previous claims, **characterised in that** two tasks are considered to be in conflict if:
- the first task is destined to be rejected,
- the second task is destined to be executed within the activation window of the first task, and
- the priority of the first task is higher than that of the second task,
with the activation window of a task corresponding to the time interval between the date from which the task may be executed and the latest date on which the task may still be executed.

5. The process according to any one of claims 1 to 3, **characterised in that** two tasks are considered to be in conflict if:
- the first task is destined to be rejected,
- the date of execution of the second task is included within the activation window of the first task, and
- the priority of the first task is higher than that of the second task,
with the activation window of a task corresponding to the time interval between the date from which the task may be executed and the latest date on which the task may still be executed.

## Patentansprüche

1. Verfahren zum Konstruieren von Zeitrastern, **dadurch gekennzeichnet, dass**:
(a) die Aufgaben in einer Hauptliste (L1) geordnet (E1) werden, um ein Zeitraster (TR) zu konstruieren, wobei die Aufgaben in dieses Zeitraster gesetzt werden oder in der Hauptliste bleiben;
(b) verifiziert (E2) wird, dass keine dieser in dieses Zeitraster gesetzten Aufgaben mit einer zum Zurückweisen bestimmten Aufgabe im Konflikt steht;
(c) dieses Zeitraster akzeptiert (E4) wird, wenn keine Aufgabe damit im Konflikt steht;
(d) ansonsten eine oder mehrere der in dem Zeitraster in Konflikt stehenden Aufgaben (TR1) in eine Nebenliste (L2) gesetzt (E3) wird/werden, die anderen Aufgaben des in die Hauptliste gesetzt werden und das Ordnen (E1 wiederholt wird, um dieses Zeitraster neu zu konstruieren, ohne die in der Nebenliste (L2) enthaltene Aufgaben zu berücksichtigen;
(e) wenn das Zeitraster akzeptiert (E4) wird, die eventuellen Aufgaben in der Nebenliste (L2) in die Hauptliste (L1) gesetzt werden, die eventuell Zurückweisen bestimmten Aufgaben zurückgewiesen (RJ) werden und das nächste Zeitraster auf dieselbe Weise (E1, E2, E3, E4) von den Aufgaben in der Hauptliste konstruiert wird.

2. Verfahren nach Anspruch 1, **dadurch gekennzeichnet, dass** zum Verifizieren, dass keine Aufgabe mit einer eventuell zum Zurückweisen bestimmten Aufgabe (E2) in Konflikt steht:
(a) verifiziert (E21) wird, dass keine Aufgabe in dem Zeitraster (TR) eine Priorität hat, die niedriger ist als die einer zum Zurückweisen bestimmten Aufgabe;
(b) wenn es keine solche Aufgabe gibt, festgestellt wird, dass keine Aufgabe in Konflikt steht;
(c) andernfalls Aufgabe aus den (LR1) zum Zurückweisen bestimmten Aufgaben (LR) ausgewählt (E22) wird, deren Priorität höher ist als die niedrigste Priorität (PMN) der Aufgaben des Zeitrasters (TR);
(d) verifiziert (E23) wird, dass die gewählte Aufgabe nicht mit einer Aufgabe des Zeitrasters (TR) in Konflikt steht;
(e) wenn die gewählte Aufgabe in Konflikt steht, das Vorliegen eines Konflikts festgestellt wird;
(f) andernfalls, wenn es keine anderen Aufgaben zu wählen gibt (24), das Nichtvorliegen eines Konflikts festgestellt wird;
(g) andernfalls eine andere Aufgabe (E22) gewählt und das Verifizieren (E23) der gewählten Aufgabe wiederholt wird.

3. Verfahren nach Anspruch 2, **dadurch gekennzeichnet, dass**, wenn ein Konflikt mit einer zum Zurückweisen bestimmten Aufgabe erkannt wurde, die mit der zur Zurückweisung bestimmten Aufgabe in Konflikt stehende Aufgabe des Zeitrasters (TR), deren Ausführungsdatum dem Ablaufdatum der zum Zurückweisen bestimmten Aufgabe am nächsten liegt, in die Nebenliste (L2) gesetzt wird (E3).

4. Verfahren nach einem der vorherigen Ansprüche, **dadurch gekennzeichnet, dass** zwei Aufgaben dann als im Konflikt stehend angesehen werden, wenn:
- die erste Aufgabe zum Zurückweisen bestimmt ist;
- die zweite Aufgabe zum Ausführen in dem Aktivierungsfenster der ersten Aufgabe bestimmt ist, und
- die Priorität der ersten Aufgabe höher ist als die der zweiten Aufgabe,
wobei das Aktivierungsfenster einer Aufgabe dem Zeitintervall zwischen dem Datum, ab dem die Aufgabe ausgeführt werden kann, und dem spätesten Datum entspricht, an dem die Aufgabe noch ausgeführt werden kann.

5. Verfahren nach einem der Ansprüche 1 bis 3, **dadurch gekennzeichnet, dass** zwei Aufgaben dann im Konflikt stehen, wenn:
- die erste Aufgabe zum Zurückweisen bestimmt ist,
- das Ausführungsdatum der zweiten Aufgabe im Aktivierungsfenster der ersten Aufgabe enthalten ist, und
- die Priorität der ersten Aufgabe höher ist als die der zweiten Aufgabe,
wobei das Aktivierungsfenster einer Aufgabe dem Zeitintervall zwischen dem Datum, ab dem die Aufgabe ausgeführt werden kann, und dem spätesten Datum entspricht, an dem die Aufgabe noch ausgeführt werden kann.
